# EUROPÄISCHE PATENTSCHRIFT

(11) **EP 4 331 952 B1**
(45) Veröffentlichungstag und Bekanntmachung des Hinweises auf die Patenterteilung: **20.05.2026**
(21) Anmeldenummer: 23192103.2
(22) Anmeldetag: 18.08.2023
(51) Int. Cl.: B62D 15/02, B62D 5/04

(54) **SENSORVORRICHTUNG FÜR EINEN RADAKTUATOR EINES STEER-BY-WIRE-SYSTEMS EINES FAHRZEUGES, RADAKTUATOR, STEER-BY-WIRE-SYSTEM, FAHRZEUG UND VERFAHREN ZUM BESTIMMEN EINER POSITION EINER LENKSTANGE EINES FAHRZEUGES**
SENSOR DEVICE FOR A WHEEL ACTUATOR OF A STEER-BY-WIRE SYSTEM OF A VEHICLE, WHEEL ACTUATOR, STEER-BY-WIRE SYSTEM, VEHICLE AND METHOD FOR DETERMINING A POSITION OF A HANDLEBAR OF A VEHICLE
DISPOSITIF DE DÉTECTION POUR UN ACTIONNEUR DE ROUE D'UN SYSTÈME DE DIRECTION PAR CÂBLES D'UN VÉHICULE, ACTIONNEUR DE ROUE, SYSTÈME DE DIRECTION PAR CÂBLES, VÉHICULE ET PROCÉDÉ DE DÉTERMINATION D'UNE POSITION D'UN GUIDON

(30) Priorität: 01.09.2022 DE 102022209105
(43) Veröffentlichungstag der Anmeldung: 06.03.2024
(73) Patentinhaber: VOLKSWAGEN AG, 38440 Wolfsburg (DE)
(72) Erfinder: Schumann, Heiko, 38116 Braunschweig (DE)

(56) Entgegenhaltungen:
- WO-A1-2020/256336
- WO-A1-2021/162248
- US-A- 5 004 063

## Beschreibung

Die Erfindung betrifft eine Sensorvorrichtung für einen Radaktuator eines Steer-by-Wire-Systems eines Fahrzeuges. Ferner betrifft die Erfindung einen korrespondierenden Radaktuator für ein Steer-by-Wire-System eines Fahrzeuges. Weiterhin betrifft die Erfindung ein korrespondierendes Steer-by-Wire-System für ein Fahrzeug sowie ein entsprechendes Fahrzeug. Des Weiteren betrifft die Erfindung ein Verfahren zum Bestimmten einer Position einer Lenkstange eines Fahrzeuges mithilfe einer korrespondierenden Sensorvorrichtung.

Zukünftige Steer-by-Wire Lenksysteme verfügen über keine mechanische Verbindung zwischen einem Lenkrad und einem Lenkgetriebe. Dadurch ist die Zuordnung zwischen Lenkradwinkel und Lenkstangenposition nicht fest und kann sich im Laufe des Betriebes ändern. Eine Bestimmung der aktuellen Lenkstangenposition mit Hilfe des Lenkradwinkels ist somit nicht mehr möglich.

Bekannte Sensoriken sehen eine Bestimmung der Lenkstangenposition über eine Rotorlageinformation einer Motorwelle in einem Powerpack eines Radaktuators vor. Solche Sensoriken nutzen oft mehrere Sensoren, die an der Motorwelle und an einer weiteren Hilfswelle angeordnet werden, um die Rotorlageinformation mithilfe des Noniusprinzips zu berechnen. Solche Sensoriken sind aufwendig in der Herstellung und im Betrieb. Weiterhin ist auch keine eindeutige Bestimmung der Lenkstangenposition über die Rotorlageinformation aus dem Stand des Fahrzeuges möglich, da eine Bewegung der Lenkstange im ausgeschalteten Zustand des Radaktuators zum Verlust der Lenkstangenposition führen kann.

Andere bekannte Sensoriken sehen eine direkte Messung der Lenkstangenposition über einen Linearsensor vor. Solche Sensoren sind relativ aufwändig, benötigen großen Bauraum, sind toleranzempfindlich und erfordern i.d.R. eine Vormontage. Weiterhin muss ein Kabel relativ komplex manuell gesteckt werden, um die Sensordatenübertragung und Spannungsversorgung zu gewährleisten.

Die WO 2020/256336 A1 zeigt Ausführungsformen für eine Lenkvorrichtung vom Steer-by-Wire-Typ, die die Produktionskosten erheblich reduzieren können, indem die Anzahl der Komponenten reduziert und der Montagevorgang vereinfacht wird, indem ein Ritzel usw. weggelassen wird und die Position einer Gleitstange erfasst wird basierend auf Rotationsinformationen, die von einem Getriebe erfasst werden, das die Rotationskraft eines Motors auf die Gleitstange überträgt.

Der Erfindung liegt daher eine Aufgabe zugrunde, eine verbesserte Sensorvorrichtung für einen Radaktuator eines Steer-by-Wire-Systems eines Fahrzeuges bereitzustellen. Insbesondere ist es Aufgabe der Erfindung, eine Sensorvorrichtung für einen Radaktuator eines Steer-by-Wire-Systems eines Fahrzeuges bereitzustellen, die eine absolute Lenkstangenposition-Bestimmung ermöglicht, sogar aus dem Stand des Fahrzeuges, bspw. bei einem Starten des Fahrzeuges, die einen einfachen Aufbau aufweist, die einfach herzustellen und aufzubauen ist, die mit wenig Rechenaufwand betrieben werden kann und die eine verbesserte elektromagnetische Verträglichkeit aufweist. Ferner liegt der Erfindung eine Aufgabe zugrunde, einen verbesserten Radaktuator für ein Steer-by-Wire-System eines Fahrzeuges bereitzustellen. Weiterhin liegt der Erfindung eine Aufgabe zugrunde, ein verbessertes Steer-by-Wire-System für ein Fahrzeug sowie ein entsprechendes Fahrzeug zur Verfügung zu stellen. Des Weiteren liegt der Erfindung eine Aufgabe zugrunde, ein verbessertes, insbesondere im Hinblick auf die absolute Positionsbestimmung der Lenkstange, Verfahren zum Bestimmten einer Position der Lenkstange eines Radaktuators mithilfe einer korrespondierenden Sensorvorrichtung bereitzustellen.

Die erfindungsgemäße Aufgabe wird gelöst durch: eine Sensorvorrichtung für einen Radaktuator eines Steer-by-Wire-Systems eines Fahrzeuges mit den Merkmalen des unabhängigen Vorrichtungsanspruches, einen Radaktuator für ein Steer-by-Wire-System eines Fahrzeuges mit den Merkmalen des nebengeordneten Vorrichtungsanspruches, ein korrespondierendes Steer-by-Wire-System für ein Fahrzeug mit den Merkmalen des unabhängigen Systemanspruches, ein entsprechendes Fahrzeug mit den Merkmalen des zweiten nebengeordneten Vorrichtungsanspruches und ein Verfahren zum Bestimmten einer Position der Lenkstange eines Radaktuators mit den Merkmalen des unabhängigen Verfahrensanspruches.

Die Erfindung stellt bereit: eine Sensorvorrichtung für ein, insbesondere längsverschiebliches, Bauteil, vorzugsweise für eine Lenkstange eines Fahrzeuges, wobei die Lenkstange durch einen Radaktuator eines Steer-by-Wire-Systems eines Fahrzeuges antreibbar ist, und wobei der Radaktuator dazu ausgeführt ist, die Lenkstange des Fahrzeuges entsprechend einer Lenkanforderung des Steer-by-Wire-Systems anzusteuern,
die Sensoreinheit aufweisend:
   - ein Gehäuse zum Anordnen der Sensorvorrichtung an einer Getriebeeinheit zum Antreiben des Bauteils, insbesondere einer Getriebeeinheit des Radaktuators,
   - eine Sensoreinheit zum Bestimmen einer Position des Bauteils, insbesondere derLenkstange des Fahrzeuges,
wobei die Sensoreinheit folgende Elemente aufweist:
   - ein Übertragungselement zum Bereitstellen einer mechanischen Wirkverbindung zu einem Getriebeelement der Getriebeeinheit,
   - einen Signalgeber, der drehfest mit dem Übertragungselement verbunden ist, zum Angeben eines Winkels des Übertragungselementes,
wobei das Übertragungselement derart ausgeführt ist, dass maximal eine Umdrehung des Übertragungselementes einen vollen Hub des Bauteils, insbesondere der Lenkstange des Fahrzeuges, abbildet.

Ein Radaktuator im Rahmen der Erfindung kann eine Antriebseinheit (sog. Powerpack, bspw. inklusive eines Motors und einer Steuervorrichtung) und eine Getriebeeinheit umfassen, die die elektrische Antriebsleitung der Antriebseinheit in die mechanische Bewegung der Lenkstange umsetzt.

Die Lenkstange steht mit der Getriebeeinheit in einer mechanischen Wirkverbindung, welche die Lenkstange entsprechend der Lenkanforderung ansteuert.

Ein Radaktuator im Rahmen der Erfindung kann bspw. als ein elektromechanisches Lenkgetriebe ausgeführt sein, z. B. mit der Bauform "Single-Pinion".

Die Lenkstange kann bspw. in Form einer Zahnstange ausgeführt sein, die mit einem korrespondierenden Getriebeelement der Getriebeeinheit zusammenwirkt, bspw. in Form eines Ritzels, um die Zahnstange zu bewegen. Die mechanische Ausführung der Lenkstange und der Getriebenheit kann allerdings auf unterschiedlichste Weise realisiert werden. Drehbare und/oder linear bewegbare Lenkstangen sind ebenfalls denkbar, die bspw. ein Außengewinde aufweisen und mit einem korrespondierenden Getriebeelement der Getriebeeinheit zusammenwirken, bspw. in Form einer Schnecke und/oder eines Gewindestabs o. Ä., um die Lenkstange zu bewegen.

Bei einer Lenkung zwischen der äußersten Linksposition und der äußersten Rechtsposition durchführt die Lenkstange eine lineare Bewegung. Wenn die Lenkstange zwischen der äußersten Linksposition und der äußersten Rechtsposition bewegt wird, spricht die vorliegende Offenbarung von einem vollen Hub der Lenkstange.

Das Übertragungselement ist dabei derart ausgeführt, dass maximal eine Umdrehung des Übertragungselementes, gemeint ist eine Umdrehung des Übertragungselementes kleiner oder gleich 360°, einen vollen Hub der Lenkstange des Fahrzeuges abbildet, durch welchen eine Lenkung zwischen der äußersten Linksposition und der äußersten Rechtsposition ermöglicht wird.

Mithilfe der Erfindung wird eine absolut messende Sensoreinheit an einer Getriebeeinheit eines Radaktuators bereitgestellt und dort vorzugsweise baulich integriert. An einem korrespondierenden Getriebeelement kann eine Verzahnung angeformt werden, in die das Übertragungselement, bspw. in Form eines Zahnrads, eingreift. Die Übersetzung kann dabei so gewählt werden, dass sich das Übertragungselement über den gesamten Hub der Lenkstange maximal einmal dreht. Mit diesem Übertragungselement ist ein Signalgeber, bspw. in Form eines Magnets, verbunden. Der Signalgeber dient der Winkelbestimmung des Übertragungselementes. Dieser Winkel lässt eindeutig auf die Position der Lenkstange schließen (max. eine Umdrehung über einen vollen Hub).

Die Sensorvorrichtung kann vorteilhafterweise so aufgebaut werden, dass das Übertragungselement, der Signalgeber und insbesondere eine Leiterplatte inkl. eines Signaldetektors in einem Gehäuse, bspw. in Form eines Deckels, bspw. aus Kunststoff, vorzugsweise mit einem angespritzten Stecker aufgenommen werden. Mithilfe des angespritzten Steckers kann eine einfache Verkabelung der Sensorvorrichtung ermöglicht werden. Auch kann somit der Montageaufwand der Sensorvorrichtung reduziert werden, da nur eine modular aufgebaute, einzeln handhabbare und zusammenhängende Baueinheit an der Getriebeeinheit montiert wird, vorzugsweise in nur einem Montageschritt.

Die Sensorvorrichtung kann vorteilhafterweise so aufgebaut werden, dass die Toleranzketten zwischen dem Signalgeber und einer Leiterplatte gering gehalten werden.

Die Spielfreiheit zwischen dem Übertragungselement und dem Getriebeelement kann dabei direkt bei der Montage der Sensorvorrichtung realisiert werden.

Die Sensorvorrichtung kann vorteilhafterweise nur zum Starten des Fahrzeuges, bspw. wenn das Fahrzeug anfährt, abgefragt werden, um den Initialwert für die Lenkstangenposition zu erhalten. Während des Betriebes des Fahrzeuges kann wieder zu einer vorhandenen Regelung der Lenkstangenposition umgeschaltet werden, die bspw. auf eine Motorlagesensierung in der Antriebseinheit bzw. im PowerPack zurückgreifen kann. Dies kann vorteilhafterweise die Anforderungen an die elektromagnetische Verträglichkeit absenken.

Für die Realisierung der Winkelmessung können unterschiedliche Messmethoden verwendet werden, bspw. magnetisch, induktiv, optisch, usw.

Ferner kann das Gehäuse dazu ausgeführt sein, die Sensoreinheit mit sämtlichen Elementen aufzunehmen. Auf diese Weise kann ermöglicht werden, dass bei der Montage der Sensorvorrichtung nur eine modular aufgebaute, einzeln handhabbare und zusammenhängende Baueinheit gehandhabt werden muss.

Weiterhin kann das Gehäuse dazu ausgeführt sein, in Form eines Deckels an der Getriebeeinheit des Radaktuators angeordnet zu werden und somit die Sensoreinheit abzudecken und vorzugsweise abzudichten. Auf diese Weise kann eine einfache Montage der Sensorvorrichtung, vorzugsweise nur in einem Montageschritt, ermöglicht werden.

Des Weiteren kann das Gehäuse derart ausgeführt sein, dass die Sensorvorrichtung in Form einer modular aufgebauten, einzeln handhabbaren und zusammenhängenden Baueinheit an der Getriebeeinheit des Radaktuators befestigbar ist, und/oder dass die Sensorvorrichtung in einem Montageschritt an der Getriebeeinheit des Radaktuators befestigbar ist. Auf diese Weise kann eine verbesserte Montage der Sensorvorrichtung ermöglicht werden.

Zudem kann vorgesehen sein, dass das Gehäuse ein Kunststoff aufweist und/oder aus einem Kunststoff ausgeformt ist. Auf diese Weise kann eine einfache Herstellung der Sensorvorrichtung ermöglicht werden, die sogar in einer großen Stückzahl erfolgen kann.

Vorteilhafterweise kann das Gehäuse in Form eines Spritzgussbauteils ausgeführt sein. Auf diese Weise kann eine einfache Herstellung der Sensorvorrichtung ermöglicht werden.

Außerdem kann vorgesehen sein, dass das Gehäuse einen, insbesondere angespritzten, Stecker und/oder einen Kabelschwanz aufweist, um eine elektrische und/oder datentechnische Versorgung für die Sensoreinheit bereitzustellen. Dadurch kann eine einfache Verkabelung der Sensorvorrichtung ermöglicht werden.

Korrespondierend zu dem Signalgeber kann die Sensoreinheit einen Signaldetektor aufweisen. Ferner kann die Sensoreinheit eine Leiterplatte aufweisen. Vorzugsweise kann auf der Leiterplatte der Sensoreinheit der Signaldetektor angeordnet sein. Um den Zusammenbau der Leiterplatte zu vereinfachen, kann die Leiterplatte am Gehäuse befestigt werden, insbesondere mithilfe von Positionierungsstiften.

Darüber hinaus ist es denkbar, dass die Sensoreinheit mindestens eines von den folgenden Messprinzipien aufweisen kann:
- elektromechanisch,
- magnetisch,
- induktiv,
- optisch, usw.

Auf diese Weise kann eine Winkelmessung auf eine flexible Weise ermöglicht werden.

Um die Herstellung der Sensorvorrichtung noch weiter zu vereinfachen, kann vorgesehen sein, dass das Übertragungselement in Form eines Zahnrades ausgeführt ist. Ferner kann das Übertragungselement eine bestimmte Übersetzung zum Getriebeelement der Getriebeeinheit aufweisen. Zum Bewegen der Lenkstange über einen vollen Hub kann sich das Getriebeelement mehrmals drehen, bspw. 2, 3, 4 oder mehr Mal. Dann kann die Übersetzung zwischen dem Übertragungselement und dem Getriebeelement entsprechend 1 zu 2, 3, 4 oder mehr eingestellt werden. Vorteilhafterweise kann vorgesehen sein, dass die Übersetzung zwischen dem Übertragungselement und dem Getriebeelement möglichst groß eingestellt wird, bspw. mindestens 1 zu 4, sodass die Sensorvorrichtung an unterschiedlichen Getriebeeinheiten flexibel angeordnet werden kann. Auf diese Weise kann außerdem ein erfasster Winkel des Übertragungselements eindeutig auf eine Position der Lenkstange hinweisen.

Um eine verbesserte Winkelbestimmung des Übertragungselementes und somit eine zuverlässige und präzise Positionsbestimmung der Lenkstange zu ermöglichen, kann vorgesehen sein, dass das Übertragungselement bei der Montage der Sensorvorrichtung an der Getriebeeinheit spielfrei am Getriebeelement der Getriebeeinheit einstellbar ist. Hierzu kann die Sensorvorrichtung als Ganzes von oben nach unten an der Getriebeeinheit abgesetzt werden und anschließend in Richtung des Getriebeelements angedrückt werden, um einen spielfreien Eingriff des Übertragungselementes am Getriebeelement der Getriebeeinheit zu ermöglichen.

Ferner stellt die Erfindung bereit: einen Radaktuator für ein Steer-by-Wire-System eines Fahrzeuges, wobei der Radaktuator dazu ausgeführt ist, eine Lenkstange des Fahrzeuges entsprechend einer Lenkanforderung des Steer-by-Wire-Systems anzusteuern, der Radaktuator aufweisend:
- eine Sensorvorrichtung zum Bestimmen einer Position der Lenkstange, welche wie oben beschrieben ausgeführt werden kann,
- und eine Getriebeeinheit mit einem Getriebeelement zum Bereitstellen einer mechanischen Wirkverbindung zu der Lenkstange des Fahrzeuges,
wobei das Getriebeelement dazu ausgeführt ist, eine bestimmte Übersetzung zum Übertragungselement bereitzustellen, sodass maximal eine Umdrehung des Übertragungselementes einen vollen Hub der Lenkstange des Fahrzeuges abbildet.

Vorteilhafterweise kann das Getriebeelement mit einer Verzahnung ausgeführt sein, um die bestimmte Übersetzung zum Übertragungselement bereitzustellen.

Mithilfe des erfindungsgemäßen Radaktuators können die gleichen Vorteile erreicht werden wie mithilfe der Sensorvorrichtung. Auf diese Vorteile wird vorliegend vollumfänglich Bezug genommen.

Weiterhin stellt die Erfindung bereit: ein Steer-by-Wire-System für ein Fahrzeug mit einem korrespondieren Radaktuator. Mithilfe des erfindungsgemäßen Steer-by-Wire-Systems können die gleichen Vorteile erreicht werden wie mithilfe der Sensorvorrichtung. Auf diese Vorteile wird vorliegend vollumfänglich Bezug genommen.

Des Weiteren stellt die Erfindung bereit: ein Fahrzeug, insbesondere ein hochautomatisiert und/oder autonom fahrendes Fahrzeug, welches ggf. über kein Lenkrad verfügt oder verfügen muss, mit einem korrespondieren Steer-by-Wire-System. Mithilfe des erfindungsgemäßen Fahrzeugs können die gleichen Vorteile erreicht werden wie mithilfe der Sensorvorrichtung. Auf diese Vorteile wird vorliegend vollumfänglich Bezug genommen.

Ferner stellt die Erfindung bereit: ein Verfahren zum Bestimmen einer Position einer Lenkstange eines Fahrzeuges mithilfe einer Sensorvorrichtung, die wie oben beschrieben ausgeführt sein kann, insbesondere bei einem Starten eines Fahrzeuges, aufweisend:
- Erfassen des Winkels des Übertragungselementes,
- Bestimmen der absoluten Position der Lenkstange mithilfe des Winkels des Übertragungselementes.

Vorteilhafterweise kann das Verfahren bei einem Starten des Fahrzeuges durchgeführt werden. Nach einem weiteren Vorteil, kann die Position der Lenkstange unabhängig von einer Motorlageerfassung in einer Antriebseinheit des Radaktuators ermittelt werden. Vorteilhafterweise kann das Verfahren nach dem Bestimmten der absoluten Position der Lenkstange beendet und/oder die Sensoreinheit ausgeschaltet werden, sodass insbesondere in einem Normalbetrieb des Fahrzeuges eine Motorlageerfassung in einer Antriebseinheit des Radaktuators die Positionsbestimmung der Lenkstange übernehmen kann. Auf diese Weise kann eine wechselseitige Beeinflussung der Sensorvorrichtung und der Motorlageerfassung vermieden werden. Somit können Erfordernisse an die elektromagnetische Verträglichkeit der Sensorvorrichtung und der Motorlageerfassung reduziert werden.

Mithilfe des erfindungsgemäßen Verfahrens können weiterhin die gleichen Vorteile erreicht werden wie mithilfe der Sensorvorrichtung. Auf diese Vorteile wird vorliegend vollumfänglich Bezug genommen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt:
- Fig. 1: eine beispielhafte Darstellung eines Radaktuators in einer Schnittdarstellung senkrecht zu einer Lenkstange,
- Fig. 2: eine vergrößerte Darstellung eines Radaktuators in einer Schnittdarstellung senkrecht zu einer Lenkstange, und
- Fig. 3: eine beispielhafte Darstellung eines Radaktuators in einer Schnittdarstellung parallel zu einer Lenkstange.

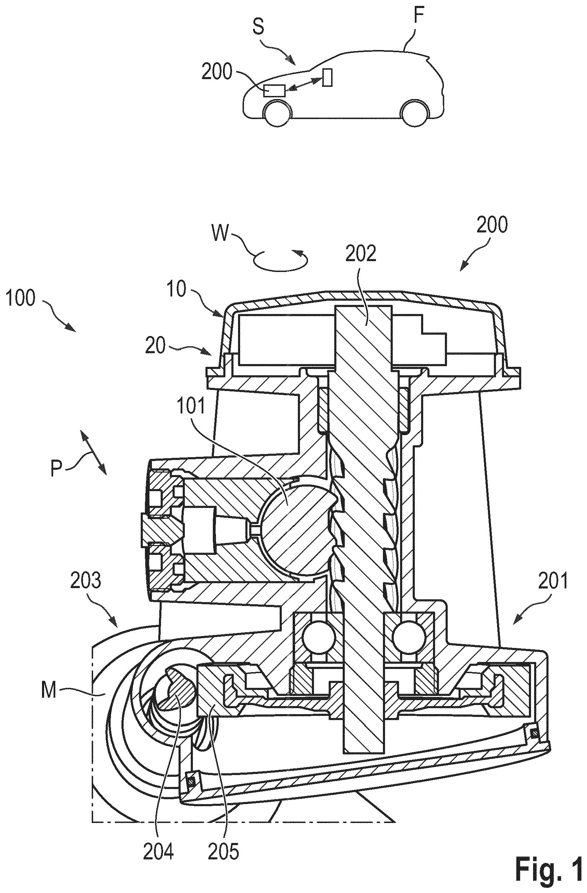

Die Fig. 1 bis 3 zeigen eine Sensorvorrichtung 100 für einen Radaktuator 200 eines Steer-by-Wire-Systems S eines Fahrzeuges F im Rahmen der vorliegenden Offenbarung. Der Radaktuator 200 im Rahmen der vorliegenden Offenbarung dient dazu, eine Lenkstange 101 des Fahrzeuges F entsprechend einer Lenkanforderung des Steer-by-Wire-Systems S anzusteuern. Der Radaktuator 200 stellt ein radseitiges Teil des Steer-by-Wire-Systems S dar.

Die Sensoreinheit 100 weist folgende Elemente auf:
- ein Gehäuse 10 zum Anordnen der Sensorvorrichtung 100 an einer Getriebeeinheit 201 des Radaktuators 200,
- eine Sensoreinheit 20 zum Bestimmen einer Position der Lenkstange 101,

wobei die Sensoreinheit 20 folgende Elemente aufweist:
   - ein Übertragungselement 21 zum Bereitstellen einer mechanischen Wirkverbindung zu einem Getriebeelement 202 der Getriebeeinheit 201,
   - einen Signalgeber 22, der drehfest mit dem Übertragungselement 21 verbunden ist, zum Angeben eines Winkels des Übertragungselementes 21,
wobei das Übertragungselement 21 derart ausgeführt ist, dass maximal eine Umdrehung des Übertragungselementes 21 einen vollen Hub der Lenkstange 101 des Fahrzeuges F abbildet.

Wie es die Fig. 1 andeutet, kann der Radaktuator 200 eine Antriebseinheit 203 (sog. Powerpack, bspw. inklusive eines Motors M mit einer Motorwelle 204 und einer aus einfachheitsgründen nicht dargestellten Steuervorrichtung) und eine Getriebeeinheit 201 (mit einem Schneckenrad 205, welches drehfest an dem Getriebeelement 202 befestigt ist) umfassen. Die Lenkstange 101 steht dabei über das Getriebeelement 202 mit der Getriebeeinheit 201 in einer mechanischen Wirkverbindung, um die Lenkstange 101 entsprechend der Lenkanforderung anzusteuern. Die Antriebseinheit 203 liefert hierzu die elektrische Leistung.

Ein Radaktuator 200 im Rahmen der Erfindung kann vorzugsweise als ein elektromechanisches Lenkgetriebe ausgeführt sein, z. B. mit der Bauform "Single-Pinion".

Die mechanische Ausführung der Lenkstange 101 und der Getriebeeinheit 201 kann allerdings auf unterschiedlichste Weise realisiert werden.

Die Lenkstange 101 kann bspw. in Form einer Zahnstange ausgeführt sein, die mit einem korrespondierenden Getriebeelement 202 der Getriebeeinheit 201 zusammenwirkt, bspw. in Form eines Ritzels.

Drehbare und linear bewegbare Lenkstangen 101 sind aber auch denkbar, die bspw. ein Außengewinde aufweisen und mit einem korrespondierenden Getriebeelement 202 der Getriebeeinheit 201 zusammenwirken, bspw. in Form einer Schnecke und/oder eines Gewindestabs o. Ä.

Bei einer Lenkung zwischen der äußersten Linksposition und der äußersten Rechtsposition durchführt die Lenkstange 101 eine lineare Bewegung mit einem vollen Hub. Das Übertragungselement 21 ist dabei derart ausgeführt, dass eine (insbesondere komplette) Umdrehung des Übertragungselementes 21 (insbesondere über 360°) den vollen Hub der Lenkstange 101 abbildet.

Somit kann eine absolut messende Sensoreinheit 20 bereitgestellt werden. Vorteilhafterweise wird die Sensorvorrichtung 100 an der Getriebeeinheit 201 befestigt.

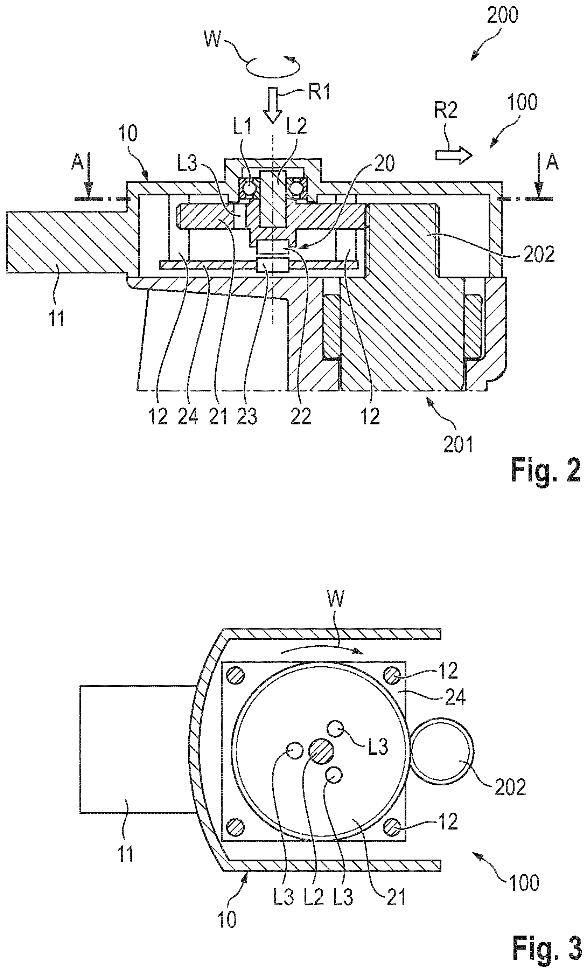

Wie es die Fig. 2 andeutet, kann das Getriebeelement 202, z. B. endseitig, mit einer Verzahnung versehen werden, in die das Übertragungselement 21, welches bspw. in Form eines Zahnrads ausgeführt sein kann, eingreift. Die Übersetzung kann dabei so gewählt werden, dass sich das Übertragungselement 21 über den gesamten Hub der Lenkstange 101 maximal nur einmal dreht.

Zum Bewegen der Lenkstange 101 über einen vollen Hub kann sich das Getriebeelement mehrmals drehen, bspw. 3 Mal. In diesem Fall kann die Übersetzung zwischen dem Übertragungselement und dem Getriebeelement 1 zu 3 eingestellt werden. Somit kann ermöglicht werden, dass über den erfassten Winkel des Übertragungselementes eindeutig auf eine absolute Position der Lenkstange 101 über einen vollen Hub geschlossen werden kann.

Mit dem Übertragungselement 21 ist ein Signalgeber 22, welcher bspw. in Form eines Magnets ausgeführt sein kann, verbunden. Der Signalgeber 22 dient der Winkelbestimmung des Übertragungselementes 21. Dieser Winkel des Übertragungselementes 21 gibt schließlich eindeutig die Position der Lenkstange 101 wieder (max. eine Umdrehung über einen vollen Hub).

Wie es die Fig. 2 ferner andeutet, kann die Sensorvorrichtung 100 vorteilhfterweise derart aufgebaut werden, dass das Übertragungselement 21, der Signalgeber 22 und insbesondere eine Leiterplatte 24 inkl. eines Signaldetektors 23 in dem Gehäuse 10 aufgenommen werden.

Das Gehäuse 10 kann bspw. in Form eines Deckels, bspw. aus Kunststoff, vorzugsweise mit einem angespritzten Stecker 11 ausgeführt sein. Mithilfe des angespritzten Steckers 11 kann eine einfache Verkabelung der Sensorvorrichtung 100 ermöglicht werden.

Der Montageaufwand der Sensorvorrichtung 100 ist gering, da nur eine modular aufgebaute, einzeln handhabbare und zusammenhängende Baueinheit an der Getriebeeinheit 201 montiert wird, vorzugsweise in nur einem Montageschritt.

Wie es aus den Fig. 2 und 3 ersichtlich ist, kann die Sensorvorrichtung 100 so aufgebaut werden, dass die Toleranzketten zwischen dem Signalgeber 22 und dem Signaldetektor 23 gering gehalten werden.

Die Spielfreiheit zwischen dem Übertragungselement 21 und dem Getriebeelement 202 kann vorteilhafterweise direkt bei der Montage der Sensorvorrichtung 100 realisiert werden.

Wie es die Fig. 2 andeutet, kann vorgesehen sein, dass das Übertragungselement 21 bei der Montage der Sensorvorrichtung 100 an der Getriebeeinheit 201 spielfrei am Getriebeelement 202 der Getriebeeinheit 201 einstellbar ist.

Hierzu kann die Sensorvorrichtung 100 als Ganzes in eine erste Richtung R1 von oben nach unten an der Getriebeeinheit 201 abgesetzt werden und anschließend in eine zweite Richtung R2 an das Getriebeelement 202 angedrückt werden, um einen spielfreien Eingriff des Übertragungselementes 21 am Getriebeelement 202 der Getriebeeinheit 201 zu ermöglichen.

Das Übertragungselement 21 kann an einem Lagerbolzen L2 drehfest befestigt werden, bspw. mittels Warmverstemmen. Der Lagerbolzen L2 kann mittels Lager L1 drehbar im Gehäuse 10 gelagert werden. An dem Übertragungselement 21 können Lagerbohrungen L3 vorgesehen werden, um die Befestigung und/oder die Lagerung des Übertragungselements 21 zu vereinfachen.

Die Sensorvorrichtung 100 kann vorzugsweise nur zum Starten des Fahrzeuges F, bspw. wenn das Fahrzeug F anfährt, eingeschaltet werden, um die Position der Lenkstange zu erfassen. Anschließend, insbesondere während des Normalbetriebes des Fahrzeuges F, kann die Sensorvorrichtung 100 wieder ausgeschaltet werden und zu einer vorhandenen Regelung der Lenkstangenposition zurückgekehrt werden. Die vorhandene Regelung der Lenkstangenposition kann bspw. auf eine Motorlagesensierung in der Antriebseinheit 203 bzw. im PowerPack zurückgreifen.

Für die Realisierung der Winkelmessung des Übertragungselementes 21 können unterschiedliche Messmethoden verwendet werden, bspw. magnetisch, induktiv, optisch, usw.

Ein korrespondierender Radaktuator 200 für ein Steer-by-Wire-System S eines Fahrzeuges F stellt ebenfalls einen Aspekt der Erfindung dar, wobei der Radaktuator 200 dazu ausgeführt ist, eine Lenkstange 101 des Fahrzeuges F entsprechend einer Lenkanforderung des Steer-by-Wire-Systems S anzusteuern, der Radaktuator 200 aufweisend:
- eine Sensorvorrichtung 100 zum Bestimmen einer Position der Lenkstange 101, welche wie oben beschrieben ausgeführt werden kann,
- und eine Getriebeeinheit 201 mit einem Getriebeelement 202 zum Bereitstellen einer mechanischen Wirkverbindung zu der Lenkstange 101 des Fahrzeuges F,
wobei das Getriebeelement 202 dazu ausgeführt ist, eine bestimmte Übersetzung zum Übertragungselement 21 bereitzustellen, sodass maximal eine Umdrehung des Übertragungselementes 21 einen vollen Hub der Lenkstange 101 des Fahrzeuges F abbildet.

Ein korrespondierendes Steer-by-Wire-System S für ein Fahrzeug F mit einem entsprechenden Radaktuator 200 stellt ebenfalls einen Aspekt der Erfindung dar. Ein korrespondierendes Fahrzeug F, insbesondere ein hochautomatisiert und/oder autonom fahrendes Fahrzeug F, welches ggf. über kein Lenkrad verfügt oder verfügen muss, mit einem entsprechenden Steer-by-Wire-System S stellt ebenfalls einen Aspekt der Erfindung dar.

Ferner stellt ein Verfahren zum Bestimmen einer Position einer Lenkstange 101 eines Fahrzeuges F mithilfe einer Sensorvorrichtung 100, die wie oben beschrieben ausgeführt sein kann, und insbesondere bei einem Starten eines Fahrzeuges F durchgeführt werden kann, ebenfalls einen Aspekt der Erfindung dar. Das Verfahren aufweisend:
- Erfassen des Winkels W des Übertragungselementes 21,
- Bestimmten der absoluten Position P der Lenkstange 101 mithilfe des Winkels W des Übertragungselementes 21.

Wie oben bereits erwähnt, kann das Verfahren insbesondere bei einem Starten des Fahrzeuges F durchgeführt werden. Vorteilhafterweise kann die Position P der Lenkstange 101 unabhängig von einer Motorlageerfassung in einer Antriebseinheit 203 des Radaktuators 200 ermittelt werden. Vorteilhafterweise kann das Verfahren nach dem Bestimmten der absoluten Position P der Lenkstange 101 beendet und/oder die Sensoreinheit 20 ausgeschaltet werden, sodass insbesondere in einem Normalbetrieb des Fahrzeuges F eine Motorlageerfassung in einer Antriebseinheit 203 des Radaktuators 200 die Positionsbestimmung der Lenkstange 101 übernehmen kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Sensorvorrichtung

- 10: Gehäuse
- 11: Stecker
- 12: Positionierungsstifte

- 20: Sensoreinheit

- 21: Übertragungselement
- 22: Signalgeber
- 23: Signaldetektor
- 24: Leiterplatte

- 101: Lenkstange

- 200: Radaktuator

- 201: Getriebeeinheit
- 202: Getriebeelement
- 203: Antriebseinheit
- M: Motor
- 204: Motorwelle
- 205: Schneckenrad

- S: System

- F: Fahrzeug

- W: Winkel
- P: Position

- L1: Lager
- L2: Lagerbolzen
- L3: Lagerbohrung

- R1: Richtung
- R2: Richtung

## Patentansprüche

1. Sensorvorrichtung (100) für eine Lenkstange (101) eines Fahrzeuges (F), wobei die Lenkstange (101) durch einen Radaktuator (200) eines Steer-by-Wire-Systems (S) eines Fahrzeuges (F) antreibbar ist, und wobei der Radaktuator (200) dazu ausgeführt ist, die Lenkstange (101) des Fahrzeuges (F) entsprechend einer Lenkanforderung des Steer-by-Wire-Systems (S) anzusteuern,
die Sensoreinheit (100) aufweisend:
- ein Gehäuse (10) zum Anordnen der Sensorvorrichtung (100) an einer Getriebeeinheit (201) zum Antreiben des Bauteils, insbesondere einer Getriebeeinheit (201) des Radaktuators (200),
- eine Sensoreinheit (20) zum Bestimmen einer Position des Bauteils, insbesondere der Lenkstange (101) des Fahrzeuges (F),
wobei die Sensoreinheit (20) folgende Elemente aufweist:
- ein Übertragungselement (21) zum Bereitstellen einer mechanischen Wirkverbindung zu einem Getriebeelement (202) der Getriebeeinheit (201),
- einen Signalgeber (22), der drehfest mit dem Übertragungselement (21) verbunden ist, zum Angeben eines Winkels des Übertragungselementes (21),
**dadurch gekennzeichnet, dass** das Übertragungselement (21) derart ausgeführt ist, dass maximal eine Umdrehung des Übertragungselementes (21) einen vollen Hub des Bauteils, insbesondere der Lenkstange (101) des Fahrzeuges (F), abbildet.

2. Sensorvorrichtung (100) nach Anspruch 1,
wobei das Gehäuse (10) dazu ausgeführt ist, die Sensoreinheit (20) mit sämtlichen Elementen aufzunehmen,
und/oder wobei das Gehäuse (10) dazu ausgeführt ist, in Form eines Deckels an der Getriebeeinheit (201) des Radaktuators (200) angeordnet zu werden und somit die Sensoreinheit (20) abzudecken und vorzugsweise abzudichten,
und/oder wobei das Gehäuse (10) derart ausgeführt ist, dass die Sensorvorrichtung (100) in Form einer modular aufgebauten, einzeln handhabbaren und zusammenhängenden Baueinheit an der Getriebeeinheit (201) des Radaktuators (200) befestigbar ist,
und/oder wobei das Gehäuse (10) derart ausgeführt ist, dass die Sensorvorrichtung (100) in einem Montageschritt an der Getriebeeinheit (201) des Radaktuators (200) befestigbar ist.

3. Sensorvorrichtung (100) nach einem der vorhergehenden Ansprüche,
wobei das Gehäuse (10) ein Kunststoff aufweist,
und/oder wobei das Gehäuse (10) in Form eines Spritzgussbauteils ausgeführt ist, und/oder wobei das Gehäuse (10) einen, insbesondere angespritzten, Stecker (11) und/oder einen Kabelschwanz aufweist, um einen elektrische und/oder datentechnische Versorgung für die Sensoreinheit (20) bereitzustellen.

4. Sensorvorrichtung (100) nach Anspruch 1 oder 2,
wobei die Sensoreinheit (20) einen Signaldetektor (23) aufweist,
und/oder wobei die Sensoreinheit (20) eine Leiterplatte (24) aufweist,
und/oder wobei auf einer Leiterplatte (24) der Sensoreinheit (20) ein Signaldetektor (23) angeordnet ist,
und/oder wobei eine Leiterplatte (24) der Sensoreinheit (20) am Gehäuse (10) befestigt ist, insbesondere mithilfe von Positionierungsstiften (12),
und/oder wobei die Sensoreinheit (20) mindestens eines von den folgenden Messprinzipien aufweist:
- elektromechanisch,
- magnetisch,
- induktiv,
- optisch, usw.

5. Sensorvorrichtung (100) nach einem der vorhergehenden Ansprüche,
wobei das Übertragungselement (21) in Form eines Zahnrades ausgeführt ist, und/oder wobei das Übertragungselement (21) eine bestimmte Übersetzung zum Getriebeelement (202) der Getriebeeinheit (201) aufweist,
und/oder wobei das Übertragungselement (21) bei der Montage der Sensorvorrichtung (100) an der Getriebeeinheit (201) spielfrei am Getriebeelement (202) der Getriebeeinheit (201) einstellbar ist.

6. Radaktuator (200) für ein Steer-by-Wire-System (S) eines Fahrzeuges (F),
wobei der Radaktuator (200) dazu ausgeführt ist, eine Lenkstange (101) des Fahrzeuges (F) entsprechend einer Lenkanforderung des Steer-by-Wire-Systems (S) anzusteuern, der Radaktuator (200) aufweisend:
eine Sensorvorrichtung (100) nach einem der vorhergehenden Ansprüche zum Bestimmen einer Position der Lenkstange (101),
und eine Getriebeeinheit (201) mit einem Getriebeelement (202) zum Bereitstellen einer mechanischen Wirkverbindung zu der Lenkstange (101) des Fahrzeuges (F),
wobei das Getriebeelement (202) dazu ausgeführt ist, eine bestimmte Übersetzung zum Übertragungselement (21) bereitzustellen,
sodass maximal eine Umdrehung des Übertragungselementes (21) einen vollen Hub der Lenkstange (101) des Fahrzeuges (F) abbildet.

7. Radaktuator (200) nach dem vorhergehenden Anspruch,
wobei das Getriebeelement (202) mit einer Verzahnung ausgeführt ist,
um die bestimmte Übersetzung zum Übertragungselement (21) bereitzustellen.

8. Steer-by-Wire-System (S) für ein Fahrzeug (F) mit einem Radaktuator (200) nach einem der vorhergehenden Ansprüche.

9. Fahrzeug (F), insbesondere ein hochautomatisiert und/oder autonom fahrendes Fahrzeug, mit einem Steer-by-Wire-System (S) nach dem vorhergehenden Anspruch.

10. Verfahren zum Bestimmen einer Position einer Lenkstange (101) eines Fahrzeuges (F) mithilfe einer Sensorvorrichtung (100) nach einem der vorhergehenden Ansprüche, insbesondere bei einem Starten eines Fahrzeuges (F), aufweisend:
- Erfassen des Winkels (W) des Übertragungselementes (21),
- Bestimmten der absoluten Position (P) der Lenkstange (101) mithilfe des Winkels (W) des Übertragungselementes (21).

11. Verfahren nach dem vorhergehenden Anspruch,
wobei das Verfahren bei einem Starten des Fahrzeuges (F) durchgeführt wird,
und/oder wobei die Position (P) der Lenkstange (101) unabhängig von einer Motorlageerfassung in einer Antriebseinheit (203) des Radaktuators (200) ermittelt wird, und/oder wobei das Verfahren nach dem Bestimmten der absoluten Position (P) der Lenkstange (101) beendet und/oder die Sensoreinheit (20) ausgeschaltet wird,
sodass insbesondere in einem Normalbetrieb des Fahrzeuges (F) eine Motorlageerfassung in einer Antriebseinheit (203) des Radaktuators (200) die Positionsbestimmung der Lenkstange (101) übernimmt.

## Claims

1. Sensor device (100) for a steering rod (101) of a vehicle (F), the steering rod (101) being drivable by a wheel actuator (200) of a steer-by-wire system (S) of a vehicle (F), and the wheel actuator (200) being designed to control the steering rod (101) of the vehicle (F) according to a steering request of the steer-by-wire system (S),
the sensor unit (100) comprising:
- a housing (10) for arranging the sensor device (100) on a gear unit (201) for driving the component, in particular a gear unit (201) of the wheel actuator (200),
- a sensor unit (20) for determining a position of the component, in particular the steering rod (101) of the vehicle (F),
the sensor unit (20) comprising the following elements:
- a transmission element (21) for providing a mechanical operative connection to a gear element (202) of the gear unit (201),
- a signal transmitter (22), which is connected to the transmission element (21) for conjoint rotation, for indicating an angle of the transmission element (21),
**characterized in that** the transmission element (21) is designed such that at most one revolution of the transmission element (21) represents a full stroke of the component, in particular the steering rod (101) of the vehicle (F).

2. Sensor device (100) according to claim 1,
wherein the housing (10) is designed to accommodate the sensor unit (20) with all the elements,
and/or wherein the housing (10) is designed to be arranged in the form of a cover on the gear unit (201) of the wheel actuator (200) and thus to cover and preferably seal the sensor unit (20),
and/or wherein the housing (10) is designed such that the sensor device (100) can be attached to the gear unit (201) of the wheel actuator (200) in the form of a modular, individually handleable and interconnected module,
and/or wherein the housing (10) is designed such that the sensor device (100) can be attached to the gear unit (201) of the wheel actuator (200) in one assembly step.

3. Sensor device (100) according to either of the preceding claims,
wherein the housing (10) comprises a plastics material,
and/or wherein the housing (10) is designed in the form of an injection-molded component,
and/or wherein the housing (10) comprises an, in particular molded-on, connector (11)
and/or a cable tail in order to provide an electrical and/or data supply for the sensor unit (20).

4. Sensor device (100) according to claim 1 or 2,
wherein the sensor unit (20) comprises a signal detector (23),
and/or wherein the sensor unit (20) comprises a circuit board (24),
and/or wherein a signal detector (23) is arranged on a circuit board (24) of the sensor unit (20),
and/or wherein a circuit board (24) of the sensor unit (20) is attached to the housing (10), in particular using positioning pins (12),
and/or wherein the sensor unit (20) incorporates at least one of the following measurement principles:
- electromechanical,
- magnetic,
- inductive,
- optical, etc.

5. Sensor device (100) according to any of the preceding claims,
wherein the transmission element (21) is designed in the form of a gear,
and/or wherein the transmission element (21) has a specific gear ratio to the gear element (202) of the gear unit (201),
and/or wherein the transmission element (21) is adjustable without play on the gear element (202) of the gear unit (201) when the sensor device (100) is assembled on the gear unit (201).

6. Wheel actuator (200) for a steer-by-wire system (S) of a vehicle (F),
wherein the wheel actuator (200) is designed to control a steering rod (101) of the vehicle (F) according to a steering request of the steer-by-wire system (S), the wheel actuator (200) comprising:
a sensor device (100) according to any of the preceding claims for determining a position of the steering rod (101),
and a gear unit (201) having a gear element (202) for providing a mechanical operative connection to the steering rod (101) of the vehicle (F),
wherein the gear element (202) is designed to provide a specific gear ratio to the transmission element (21),
so that at most one revolution of the transmission element (21) represents a full stroke of the steering rod (101) of the vehicle (F).

7. Wheel actuator (200) according to the preceding claim,
wherein the gear element (202) is designed with teeth
in order to provide the specific gear ratio to the transmission element (21).

8. Steer-by-wire system (S) for a vehicle (F), comprising a wheel actuator (200) according to any of the preceding claims.

9. Vehicle (F), in particular a highly automated and/or autonomously driving vehicle, comprising a steer-by-wire system (S) according to the preceding claim.

10. Method for determining a position of a steering rod (101) of a vehicle (F) using a sensor device (100) according to any of the preceding claims, in particular when starting a vehicle (F), comprising:
- detecting the angle (W) of the transmission element (21),
- determining the absolute position (P) of the steering rod (101) using the angle (W) of the transmission element (21).

11. Method according to the preceding claim,
wherein the method is carried out when the vehicle (F) is started,
and/or wherein the position (P) of the steering rod (101) is ascertained independently of an engine position detection device in a drive unit (203) of the wheel actuator (200),
and/or wherein the method is terminated and/or the sensor unit (20) is switched off after the absolute position (P) of the steering rod (101) has been determined,
so that, in particular during normal operation of the vehicle (F), an engine position detection device in a drive unit (203) of the wheel actuator (200) takes over the position determination of the steering rod (101).

## Revendications

1. Dispositif formant capteur (100) pour une barre de direction (101) d'un véhicule (F), dans lequel la barre de direction (101) peut être entraînée par un actionneur de roue (200) d'un système de direction à direction électrique (S) d'un véhicule (F), et dans lequel l'actionneur de roue (200) est réalisé pour commander la barre de direction (101) du véhicule (F) conformément à une demande de direction du système de direction à direction électrique (S),
l'unité de capteur (100) présentant :
- un carter(10) pour agencer le dispositif formant capteur (100) sur une unité de transmission (201) pour entraîner le composant, en particulier une unité de transmission (201) de l'actionneur de roue (200),
- une unité de capteur (20) pour déterminer une position du composant, en particulier de la barre de direction (101) du véhicule (F),
dans lequel l'unité de capteur (20) présente les éléments suivants :
- un élément de transfert (21) pour fournir une liaison mécanique fonctionnelle avec un élément de transmission (202) de l'unité de transmission (201),
- un générateur de signaux (22) qui est relié de manière solidaire en rotation à l'élément de transfert (21) pour indiquer un angle de l'élément de transfert (21),
**caractérisé en ce que** l'élément de transfert (21) est réalisé de telle sorte qu'au maximum une rotation de l'élément de transfert (21) reproduit une course complète du composant, en particulier de la barre de direction (101) du véhicule (F).

2. Dispositif formant capteur (100) selon la revendication 1,
dans lequel le carter (10) est réalisé pour recevoir l'unité de capteur (20) avec tous les éléments,
et/ou dans lequel le carter (10) est réalisé pour être agencé sous la forme d'un moyen de recouvrement sur l'unité de transmission (201) de l'actionneur de roue (200) et ainsi recouvrir et de préférence rendre étanche l'unité de capteur (20),
et/ou dans lequel le carter (10) est réalisé de telle sorte que le dispositif formant capteur (100) peut être fixé sur l'unité de transmission (201) de l'actionneur de roue (200) sous la forme d'une unité modulaire, manipulable individuellement et cohérente,
et/ou dans lequel le carter (10) est réalisé de telle sorte que le dispositif formant capteur (100) peut être fixé à l'unité de transmission (201) de l'actionneur de roue (200) lors d'une étape de montage.

3. Dispositif formant capteur (100) selon l'une des revendications précédentes,
dans lequel le carter (10) présente une matière plastique,
et/ou dans lequel le carter (10) est réalisé sous la forme d'un composant moulé par injection,
et/ou dans lequel le carter (10) présente un connecteur (11), en particulier moulé par injection,
et/ou une cosse de câble pour fournir une alimentation électrique et/ou de données à l'unité de capteur (20).

4. Dispositif formant capteur (100) selon la revendication 1 ou 2,
dans lequel l'unité de capteur (20) présente un détecteur de signaux (23),
et/ou dans lequel l'unité de capteur (20) présente une carte de circuit imprimé (24),
et/ou dans lequel un détecteur de signaux (23) est agencé sur une carte de circuit imprimé (24) de l'unité de capteur (20),
et/ou dans lequel une carte de circuit imprimé (24) de l'unité de capteur (20) est fixée au carter (10), en particulier à l'aide de broches de positionnement (12),
et/ou dans lequel l'unité de capteur (20) présente au moins l'un des principes de mesure suivants:
- électromécanique,
- magnétique,
- inductif,
- optique, etc.

5. Dispositif formant capteur (100) selon l'une des revendications précédentes,
dans lequel l'élément de transfert (21) est réalisé sous la forme d'une roue dentée,
et/ou dans lequel l'élément de transfert (21) présente un rapport de transmission déterminé par rapport à l'élément de transmission (202) de l'unité de transmission (201),
et/ou dans lequel l'élément de transfert (21) peut être réglé sans jeu sur l'élément de transmission (202) de l'unité de transmission (201) lors du montage du dispositif formant capteur (100) sur l'unité de transmission (201).

6. Actionneur de roue (200) pour un système de direction à direction électrique (S) d'un véhicule (F),
dans lequel l'actionneur de roue (200) est réalisé pour commander une barre de direction (101) du véhicule (F) conformément à une demande de direction du système de direction à direction électrique (S), l'actionneur de roue (200) présentant :
un dispositif formant capteur (100) selon l'une des revendications précédentes pour déterminer une position de la barre de direction (101),
et une unité de transmission (201) comportant un élément de transmission (202) pour fournir une liaison mécanique fonctionnelle avec la barre de direction (101) du véhicule (F),
dans lequel l'élément de transmission (202) est réalisé pour fournir un rapport de transmission déterminé à l'élément de transfert (21),
de sorte qu'au maximum une rotation de l'élément de transfert (21) reproduit une course complète de la barre de direction (101) du véhicule (F).

7. Actionneur de roue (200) selon la revendication précédente,
dans lequel l'élément de transmission (202) est réalisé avec une denture,
pour fournir le rapport de transmission déterminé à l'élément de transfert (21).

8. Système de direction à direction électrique (S) pour un véhicule (F) comportant un actionneur de roue (200) selon l'une des revendications précédentes.

9. Véhicule (F), en particulier véhicule à conduite hautement automatisée et/ou autonome, comportant un système de direction à direction électrique (S) selon la revendication précédente.

10. Procédé pour la détermination d'une position d'une barre de direction (101) d'un véhicule (F) à l'aide d'un dispositif formant capteur (100) selon l'une des revendications précédentes, en particulier lors d'un démarrage d'un véhicule (F), présentant :
- l'acquisition de l'angle (W) de l'élément de transfert (21),
- la détermination de la position (P) absolue de la barre de direction (101) à l'aide de l'angle (W) de l'élément de transfert (21).

11. Procédé selon la revendication précédente,
dans lequel le procédé est mis en œuvre lors d'un démarrage du véhicule (F),
et/ou dans lequel la position (P) de la barre de direction (101) est définie indépendamment d'une acquisition de position de moteur dans une unité d'entraînement (203) de l'actionneur de roue (200),
et/ou dans lequel le procédé est terminé après la détermination de la position (P) absolue de la barre de direction (101) et/ou l'unité de capteur (20) est désactivée,
de sorte que, en particulier lors d'un fonctionnement normal du véhicule (F), une acquisition de position de moteur dans une unité d'entraînement (203) de l'actionneur de roue (200) prend en charge la détermination de position de la barre de direction (101).
